# EUROPEAN PATENT SPECIFICATION

(11) **EP 4 304 367 B1**
(45) Date of publication and mention of the grant of the patent: **11.06.2025**
(21) Application number: 22710052.6
(22) Date of filing: 02.03.2022
(51) Int. Cl.: A23F 3/14, A23F 3/34, A23F 3/26, A23L 2/58

(54) **A PROCESS FOR PRODUCING A HERBAL COMPOSITION**
VERFAHREN ZUR HERSTELLUNG EINER KRÄUTERZUSAMMENSETZUNG
PROCÉDÉ DE PRODUCTION D'UNE COMPOSITION À BASE D'HERBES

(30) Priority: 10.03.2021 IN 202121010140; 21.09.2021 EP 21198110
(43) Date of publication of application: 17.01.2024
(73) Proprietor: Ekaterra Research and Development UK Limited, Sharnbrook, Bedfordshire MK44 1LQ (GB)
(72) Inventor: BASAVARAJU, Lokesh, Bangalore 560 066 (IN); GUTTAPADU, Sreeramulu, Bangalore 560 066 (IN); GOVINDASWAMY, Vadivel, Bangalore 560 066 (IN)
(74) Representative: Mewburn Ellis LLP
(86) International application number: PCT/EP2022/055314
(87) International publication number: WO 2022/189232

(56) References cited:
- WO-A1-2017/063906
- CN-A- 106 173 095
- CN-A- 106 720 795
- CN-A- 108 684 891
- KR-A- 20190 032 857

## Description

The present invention relates to a process for producing a herbal composition, wherein the herb is selected from hibiscus, rosehip, mint, lemon verbena, chicory and orange. In particular, the present invention relates to a process for producing a herbal composition with enhanced colour.

### Background and Prior Art

Any kind of beverage product is believed to refresh the mind. There are several non-alcoholic beverages available in the market for consumption. Tea and coffee are the most popular out of these non-alcoholic beverages. Traditionally, tea referred to those products which indeed obtained from tea plant. However, the definition of tea has become much wider to include any form of herbal infusion and now any herbal infusion is widely called a tea or more particularly herbal tea.

Herbal teas or herbal infusions are becoming popular because of the various health benefits provided by the different herbs. It is a new format which not only serves as a beverage but also provides several health benefits depending on the herbs.

Prior art discloses herbal tea compositions.

WO8906966 (1989, EGAL VEGYIPARI KOEZOES VALLALAT) discloses herbal tea containing 10 to 30 percent by weight of parsley fern flowers (Tanaceti flos), 10 to 30 percent by weight of hawthorn tips (Crataegi flos cum foliis), 5 to 15 percent by weight of citronella (Melissa oficinalis folium), and 25 to 75 percent by weight of tonics, drugs, stimulants and vitamins.

DE10243934 (2003, STERKEN BRIGITTE) discloses a buckwheat plant tea composition, to be infused or boiled with water, containing horse chestnut blossom and/or horse chestnut leaves.

RU2346452 (2009, LIABILITY COMPANY LTD) discloses a herbal tea composition including mate, lemongrass and natural grapefruit flavour in a certain ratio. CN 106 173 095 A discloses a method of preparation of herbal tea with peony flowers, hibiscus flowers, orange, purple wing sylvestris, fresh juniper berries and rosehips.

We have found that one of the problems associated with herbal infusions is the colour of the infusion. Although the prior art discloses herbal tea products, none deal with the issue of the typically very light coloured infusions that arise from herbal products which is a problem for consumers who predominantly consume traditional tea products, in particular black tea products, who to have a beverage which is darker in colour e.g. rich red colour. Therefore, herbal products with rich coloured infusions remain to be desired.

### Objects of the invention

In view of the foregoing, it is an object of the present invention to provide a herbal composition. It is another object of the present invention to provide a herbal composition that provides a rich coloured infusion.

The present inventors have surprisingly found that a particular process of treating a herb, the process comprising a step of vacuum treatment, produces a herbal composition with rich coloured infusion.

### Summary of the invention

In a first aspect, the present invention therefore provides a process for producing a herbal composition comprising the steps of;
a) providing a herb or herbs with a moisture content of at least 50% by weight;
b) placing the herb or herbs under a vacuum of less than 350 Pascal thereby to reduce the moisture of the herb by at least 50%; and
c) drying the herb or herbs to a moisture content of less than 5% by weight, wherein the herb is selected from hibiscus, rosehip, mint, lemon verbena, chicory and orange.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." **In** other words, the listed steps or options need not be exhaustive. **It** is noted that the examples given in the description below are intended to clarify the invention and are not intended to limit the invention to those examples *per* se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The present invention discloses a process for producing a herbal composition comprising the steps of;
a) providing a herb or herbs with a moisture content of at least 50% by weight;
b) placing the herb or herbs under a vacuum of less than 350 Pascal thereby to reduce the moisture of the herb by at least 50%; and
c) drying the herb or herbs to a moisture content of less than 5% by weight, wherein the herb is selected from hibiscus, rosehip, mint, lemon verbena, chicory and orange.

For the process of the present invention the moisture content of the herb is at least 50% by weight, more preferably at least 55% by weight and most preferably at least 60% by weight. The moisture content of the herb preferably is in the range of 50 to 80% by weight, more preferably 55 to 75% by weight and most preferably 60 to 75% by weight.

If dried herbs are used, then preferably water (moisture) is added to make the moisture content of the herbs at least 50% by weight as mentioned above. The moisture content of the dried herbs are generally in the range of less than 10% by weight, most preferably less than 5% by weight.

After the herb is selected as per the above-mentioned requirements, the herb is placed under a vacuum of less than 350 Pascal, preferably less than 300 Pascal, more preferably less than 250 Pascal. The required vacuum can be applied by any standard method. The herbs are exposed to the vacuum until a point when the moisture content is reduced to at least half from the starting point. For example, if the initial moisture content of the herb is 60%, then vacuum to be applied till the moisture content of the herb becomes at least 30%. Preferably the herbs are exposed to the vacuum until a point when the moisture content is reduced by 60%, more preferably 70%, more preferably still 80%, most preferably 90%.

After the vacuum step, the herb is dried to a moisture content of less than 5% by weight to obtain a final product.

The drying step may preferably carried out by thermal drying, freeze drying or vacuum drying.

Thermal drying is preferably carried out by contacting the leaf with air; with the temperature of air being preferably 80 to 160°C, more preferably 90 to 150°C, most preferably 100 to 130°C. Thermal drying may be carried out in any conventional dryer. However, a fluidized bed dryer or a tray dryer is particularly preferred for thermal drying.

In a preferred embodiment, the herbal composition as obtained by the process of the present invention may be blended with a traditional tea product. The tradition tea product is preferably selected from black tea, green tea, white tea and oolong tea or mixtures thereof.

As used herein, traditional tea product means materials from *Camellia sinensis* var. *sinensis* and/or *Camellia sinensis* var. *assamica.* Especially preferred is material from var. *assamica* as this has a higher level of tea actives than var. *sinensis.*

The terms black tea, green tea, white tea and oolong tea refers to the teas which are generally known by their respective names as mentioned above.

"Black tea" refers to substantially fermented tea. Black tea has different characteristics to green tea. Black tea is more astringent in taste and less bitter than green tea. The redness of black tea liquor is also significantly higher than that of green tea. Black tea also contains higher level of theaflavins.

In case of blending, the amount of traditional tea product preferably is in the range of 5% to 95% by weight, more preferably 10% to 80% by weight, further more preferably 20% to 70% by weight, yet more preferably 25% to 65% by weight and most preferably 30% to 60% by weight.

The present invention will now be demonstrated by way of non-limiting examples below. The examples are for illustration only and do not limit the scope of the invention in any manner.

### Examples:

To carry out the experimentation, market Lipton 100% Hibiscus herbal tea bags infusion samples were procured from Unilever Dubai. Samples were manufactured by Unilever Gulf, Dubai, UAE and packed by Dubai Tea Trading Centre, Dubai, UAE. The sample was produced in August 2020, with production batch number 20236. The particle size of the herbal material collected from the tea bag was <1mm or fannings/dust grade.

Using the above samples (removed from the tea bags), the following herbal products were prepared.

### Control Example A

The Lipton ^{®} hibiscus tea as procured are used directly without any additional treatment.

### Control Example B

60% (by weight) water was added to the hibiscus tea and allowed to absorb for about 1 hour at ambient temperature (~ 25°C). After hydration it was kept in a tray and 50% (by weight) of moisture was removed by applying vacuum at 1200 Pascal (9000 millitorr). The vacuum treatment was carried out on wet hibiscus tea samples using a pilot scale freeze drier (Lyomax LT 8S) with 30L condenser capacity. The total shelf area was about 1.1 to1.67 m². The total width & length of the sampling shelf was about 30.48 cm (12 inches) and 60.96 cm (24 inches) respectively. The condenser temperature was maintained at - 60 °C and shelf set temperature was 24 °C. After that it was taken out from the tray put it in a in a hot air oven at 110 °C to obtain a herbal product with moisture content less than 5% by weight.

### Control Example C

This example is same as Example B except the vacuum applied is 599.95 Pascal (4500 millitorr).

### Example 1

This example is also same as Example B except the vacuum applied is 266.64 Pascal (2000 millitorr).

Infusions were prepared using the above products by following the protocol as described below:
Infusion was prepared by putting individually 1 gram of each products produced above in pyramid chambered bags. The bags were then placed in different beakers containing 200 ml of water (25°C) each and dunked 30 times (~ 1 dunk per second). After this the bags were removed from water. Colour values of infusion (L*, a*, b*) were measured by using Hunter Lab Colour Meter in a transmittance mode by following the protocol as mentioned below.

### Colour measurement:

Colour (CIE L*a*b* values) was measured using a Hunter Lab Ultrascan Vis (Hunter Lab Associates Laboratories Inc. Virginia) which works on the measurement principle of dual beam spectrophotometer. Pulsed Xenon lamp was used a light source. The illuminant used was D65(Daylight) and Observer angle was 10° degree. Measurements were made using a quartz cuvette of 10 mm path length. The instrument was calibrated using a standard white tile (Hunterlab Duffuse/8°, mode-RSIN/RSEX, Port-1" and area- large) in accordance with the instructions provided in the instruction manual. TTRAN mode is used for measuring infusion samples. The infusions were filled up to the brim in the quartz cuvette and placed in the instrument transmittance section for colour measurement. The L*a*b* values were measured at room temperature (25°C). The maximum value for L* is 100, which represents a perfect reflecting diffuser. The minimum is L*=0, which represents black. The a* and b* axes have no specific numerical limits. Positive a* connotes to red colour and negative a* connotes to green. Similarly, positive b* value connotes yellow colour and negative b* value connotes to blue colour. The higher the a* value the redder is the infusion. The results are summarized in the following Table 1:

**Table 1: Red colour values of infusion measured as per the above methodology.**

| **Example No** | a* **value** |
|---|---|
| A | 7.80 |
| B | 7.68 |
| C | 7.68 |
| 1 | 11.80 |

From the above table it is evident that the product produced by the process of the present invention (Example 1) provide a tea infusion with very high red colour value when compared with the control experiments (Example A , B and C) which are outside the scope of the present invention.

## Claims

1. A process for producing a herbal composition comprising the steps of;
a) providing a herb or herbs with a moisture content of at least 50% by weight;
b) placing the herb or herbs under a vacuum of less than 350 Pascal thereby to reduce the moisture of the herb by at least 50%; and
c) drying the herb or herbs to a moisture content of less than 5% byweight, wherein the herb is selected from hibiscus, rosehip, mint, lemon verbena, chicory and orange.

2. A process according to claim 1 wherein the moisture content of the herb or herbs is less than 10% by weight and wherein the process comprises a further step of adding water to said herb to elevate the moisture content to 50% to 65% by weight.

3. A process according to claim 1 wherein the vacuum applied in step (b) is less than 300 Pascal.

4. A process according to claim 3 wherein the vacuum applied in step (b) is less than 250 Pascal.

5. A process according to any one of the preceding claims wherein the herb is hibiscus.

6. A process according to any one of the preceding claims wherein the herbal composition as obtained by any one of the preceding claims is blended with a traditional tea product.

7. A process according to claim 6 wherein the traditional tea product is selected from black tea, green tea, white tea and oolong tea or mixtures thereof.

8. A process according to either claims 6 or 7 wherein the amount of traditional tea product blended with the herbal composition is in the range of 5% to 95% by weight of the blended product.

9. A process according to claim 8 wherein the amount of traditional tea blended with the herbal composition is in the range of 30% to 60% by weight of the blended product.

## Patentansprüche

1. Verfahren zur Herstellung einer Kräuterzusammensetzung, das die folgenden Schritte umfasst:
a) das Bereitstellen eines Krauts oder von Kräutern mit einem Feuchtigkeitsgehalt von zumindest 50 Gew.-%;
b) das Platzieren des Krauts oder der Kräuter in einem Vakuum von weniger als 350 Pascal, wodurch die Feuchtigkeit des Krauts um zumindest 50 % verringert wird; und
c) das Trocknen des Krauts oder der Kräuter bis zu einem Feuchtigkeitsgehalt von weniger als 5 Gew.-%, wobei das Kraut aus Hibiskus, Hagebutte, Minze, Zitronenverbene, Zichorie und Orange ausgewählt ist.

2. Verfahren nach Anspruch 1, wobei der Feuchtigkeitsgehalt des Krauts oder der Kräuter geringer ist als 10 Gew.-% und wobei das Verfahren einen weiteren Schritt des Zusetzens von Wasser zu dem Kraut umfasst, um den Feuchtigkeitsgehalt auf 50 Gew.-% bis 65 Gew.-% anzuheben.

3. Verfahren nach Anspruch 1, wobei das in Schritt (b) angelegte Vakuum geringer ist als 300 Pascal.

4. Verfahren nach Anspruch 3, wobei das in Schritt (b) angelegte Vakuum geringer ist als 250 Pascal.

5. Verfahren nach einem der vorangegangenen Ansprüche, wobei das Kraut Hibiskus ist.

6. Verfahren nach einem der vorangegangenen Ansprüche, wobei die nach einem der vorangegangenen Ansprüche erhaltene Kräuterzusammensetzung mit einem traditionellen Teeprodukt vermischt wird.

7. Verfahren nach Anspruch 6, wobei das traditionelle Teeprodukt aus Schwarztee, grünem Tee, weißem Tee und Oolong-Tee oder Gemischen davon ausgewählt ist.

8. Verfahren nach Anspruch 6 oder 7, wobei die Menge des traditionellen Teeprodukts, das mit der Heilpflanzenzusammensetzung vermischt wird, im Bereich von 5 Gew.-% bis 95 Gew.-% des gemischten Produkts liegt.

9. Verfahren nach Anspruch 8, wobei die Menge des traditionellen Tees, der mit der Kräuterzusammensetzung vermischt wird, im Bereich von 30 Gew.-% bis 60 Gew.-% des gemischten Produkts liegt.

## Revendications

1. Procédé de production d'une composition à base d'herbe, comprenant les étapes consistant à :
a) fournir une herbe ou des herbes présentant une teneur en humidité d'au moins 50 % en poids ;
b) placer l'herbe ou les herbes sous un vide inférieur à 350 pascals afin de réduire ainsi l'humidité de l'herbe d'au moins 50 % ; et
c) sécher l'herbe ou les herbes jusqu'à une teneur en humidité inférieure à 5 % en poids,
dans laquelle l'herbe est sélectionnée parmi l'hibiscus, l'églantier, la menthe, la verveine citronnée, la chicorée et l'orange.

2. Procédé selon la revendication 1, dans lequel la teneur en humidité de l'herbe ou des herbes est inférieure à 10 % en poids, et dans lequel le procédé comprend une étape supplémentaire consistant à ajouter de l'eau à ladite herbe pour élever la teneur en humidité jusqu'à 50 % à 65 % en poids.

3. Procédé selon la revendication 1, dans lequel le vide appliqué dans l'étape (b) est inférieur à 300 pascals.

4. Procédé selon la revendication 3, dans lequel le vide appliqué dans l'étape (b) est inférieur à 250 pascals.

5. Procédé selon l'une quelconque des revendications précédentes, dans lequel l'herbe est l'hibiscus.

6. Procédé selon l'une quelconque des revendications précédentes, dans lequel la composition à base d'herbe telle qu'obtenue par l'une quelconque des revendications précédentes est mélangée à un produit à base de thé traditionnel.

7. Procédé selon la revendication **6,** dans lequel le produit à base de thé traditionnel est choisi parmi le thé noir, le thé vert, le thé blanc et le thé oolong, ou des mélanges de ceux-ci.

8. Procédé selon l'une quelconque des revendications 6 ou 7, dans lequel la quantité de produit à base de thé traditionnel mélangé avec la composition à base d'herbe est dans la plage de 5 % à 95 % en poids du produit mélangé.

9. Procédé selon la revendication 8, dans lequel la quantité de thé traditionnel mélangée avec la composition à base d'herbe est dans la plage de 30 % à 60 % en poids du produit mélangé.
